# EUROPEAN PATENT APPLICATION

(11) **EP 4 009 086 A1**
(43) Date of publication of application: **08.06.2022**
(21) Application number: 20306501.6
(22) Date of filing: 04.12.2020
(51) Int. Cl.: G01V 1/28, G01V 1/30

(54) **A METHOD FOR OBTAINING AT LEAST ONE PHYSICAL PROPERTY OF A SUBSURFACE VOLUME OF A HYDROCARBON RESERVOIR OVER TIME**

(71) Applicant: TOTAL SE, 92400 Courbevoie (FR)
(72) Inventor: BERTHET, Philippe, 64018 PAU CEDEX (FR); TRANI, Mario, 64018 PAU CEDEX (FR)
(74) Representative: Lavoix

(57) **Abstract**

The invention relates to a method for obtaining a physical property of a subsurface volume of a hydrocarbon reservoir over time comprising a fluid, carried out by a system and comprising the following steps:
- obtaining (300) observed data representative of a fluid saturation in said volume over time,
- mapping (310) a location of an observed fluid front from the observed data,
- obtaining (330) simulated data representative of the fluid saturation in said volume over time using a reservoir model (335),
- mapping (340) a location of a simulated fluid front from the simulated data,
- obtaining (360) simulated fluid flow streamlines in said volume over time from a flow simulator (345),
- computing (370) and minimizing (380) a cost function representing a mismatch between the observed and simulated data by calculating (375) a shortest distance among distances along corresponding simulated streamlines,
- obtaining (400) said physical property.

## Description

The present invention relates, according to a first aspect, to a method for obtaining at least one physical property of a subsurface volume of a hydrocarbon reservoir over time, the subsurface volume comprising a porous medium containing at least one fluid, the method being carried out by a system for obtaining at least one physical property of a subsurface volume of a hydrocarbon reservoir over time.

In particular, the present invention relates to a history matching technique. This kind of techniques consists in adjusting a model of the hydrocarbon reservoir by manipulating the physical properties attributed to cells representing the model. The physical properties are for example porosity, permeability, relative permeability, etc. The objective is to match the model with actual production data such as fluid flow rate (oil, water and gas) or bottom hole pressures over time and then predict any physical properties of the hydrocarbon reservoir such as future oil and gas fluid flow rates, fluid flow properties, pressure, temperature, etc., and also 3D time lapse seismic data (4D).

This process may be carried out manually for coarse hydrocarbon reservoirs with a few production/injection wells and a limited number of cells. For larger hydrocarbon reservoirs with many production/injection wells, manual history matching is not adapted. Assisted History matching (AHM) techniques allow automating such process. These techniques usually rely upon an iterative process of minimization of a cost function.

Assisted history matching techniques involve the manipulation of large set of data, generally in four dimensions (three-dimension space and variations of the properties over time). This amount of data cannot be numerically handled easily and requires a high memory and processing power.

Abadpour et al. in "4D Seismic History Matching With Ensemble Kalman Filter - Assimilation on Hausdorff Distance to Saturation Front", SPE Reservoir Simulation Symposium, 2013, discloses the use of a 4D distance to the fluid front called the Hausdorff distance. The distance is computed for each cell of the model. Although the use of said distance allows the convergence of the minimization process, it still implies working with a large number of data.

An object of the invention is to provide a fast and efficient method for obtaining at least one physical property of a subsurface volume of a hydrocarbon reservoir over time through assisted history matching.

To this aim, the subject-matter of the invention relates to a method comprising the following steps:
- obtaining observed data representative of a fluid saturation in the subsurface volume over time,
- mapping a location of at least one observed fluid front over time from the observed data,
- obtaining simulated data representative of the fluid saturation in the subsurface volume over time using at least one reservoir model,
- mapping a location of at least one simulated fluid front over time from the simulated data,
- obtaining simulated fluid flow streamlines in the subsurface volume over time from a flow simulator,
- computing a cost function representing a mismatch between the observed data and the simulated data by calculating at least one shortest distance among a plurality of distances along a corresponding plurality of simulated fluid flow streamlines, each of said simulated fluid flow streamlines connecting a same first location of the observed fluid front to a same second location of the simulated fluid front,
- minimizing said cost function,
- obtaining the at least one physical property of the subsurface model over time.

The method according to the invention may comprise one or more of the following features, taken into consideration in isolation, or according to any one of any technically feasible combinations:
- the observed data representative of the fluid saturation are obtained from seismic data inversion computed for the subsurface volume over time;
- the at least one observed fluid front and/or the at least one simulated fluid front are three-dimension surfaces;
- each calculated distance is a curvilinear distance along the fluid flow streamline;
- the location of any point of the observed fluid front is connected to the location of a point of the simulated fluid front by a plurality of streamlines of the simulated fluid flow streamlines;
- the method comprises obtaining a plurality of simulated data representative of the fluid saturation in the subsurface volume over time using a plurality of reservoir models;
- the method comprises applying an ensemble-based methods, such as an ensemble Kalman filter, for evaluating the plurality of reservoir models;
- the step of mapping the location of the at least one observed fluid front and/or of the location of the at least one simulated fluid front comprises calculating data changes over time respectively on the observed data and/or on the simulated data in the subsurface volume and applying a data change threshold;
- the subsurface volume is discretized into a plurality of cells, at least a part of the plurality of cells having at least one observed data value representative of the fluid saturation and at least one simulated data value representative of the fluid saturation;
- the step for mapping the location of the at least one observed fluid front and/or the at least one simulated fluid front comprises determining a binary parameter for each cell of the subsurface model chosen among a downstream of the front state and an upstream of the front state using the flow simulator, the fluid front being formed by a plurality of cells located at the interface between the cells having a downstream of the front state and the cells having an upstream of the front state;
- the binary parameter of the cell is a downstream of the front state if the observed data value and/or simulated data value of said cell is above a threshold or if a data change over time of said cell is above a data change threshold;
- the distance along the streamline is calculated between one cell of the simulated fluid front and one cell of the observed fluid front;

According to a second aspect, the invention deals with a system for obtaining at least one physical property of a subsurface volume of a hydrocarbon reservoir over time, said system comprising:
- an observed data obtaining module configured for obtaining observed data representative of a fluid saturation in the subsurface volume over time,
- an observed fluid front mapping module for mapping a location of at least one observed fluid front over time from the observed data,
- a simulated data obtaining module for obtaining simulated data representative of the fluid saturation in the subsurface volume over time using at least one reservoir model,
- a simulated fluid front mapping module for mapping a location of at least one simulated fluid front over time from the simulated data,
- a simulated fluid flow streamlines obtaining module for obtaining simulated fluid flow streamlines in the subsurface volume over time from a flow simulator,
- a computing module for computing a cost function representing a mismatch between the observed data and the simulated data by calculating at least one shortest distance among a plurality of distances along a corresponding plurality of simulated fluid flow streamlines, each of said simulated fluid flow streamlines connecting a same first location of the observed fluid front to a same second location of the simulated fluid front,
- a minimizing module for minimizing said cost function,
- a physical property obtaining module for obtaining the at least one physical property of the subsurface model over time.

According to a particular embodiment, each observed fluid front mapping module and simulated fluid front mapping module comprises a calculating submodule for calculating data changes over time respectively on the observed data representative of the fluid saturation and/or on the simulated data representative of the fluid saturation in the subsurface volume and applying a data change threshold.

Finally, according to third aspect, the invention relates to a computer program product comprising software instructions which, when executed by a computer, carry out the method as described above.

The invention will be better understood, upon reading of the following description, taken solely as an example, and made in reference to the following drawings, in which:
- figure 1 is a schematic representation of a system to carry out the method according to the invention,
- figure 2 is a schematic flow chart of a method according to the invention,
- figures 3 to 6 are horizontal layers extracted from a 3D model illustrating various steps of the method of figure 1.

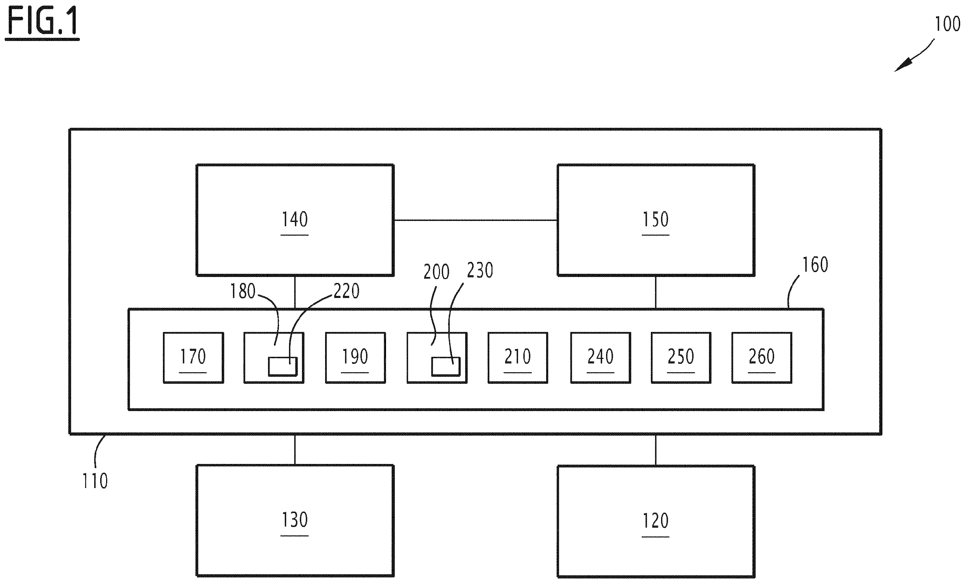

Figure 1 shows a system 100 for obtaining at least one physical property of a subsurface volume of a hydrocarbon reservoir over time.

The subsurface volume comprises a porous medium containing at least one fluid.

Typically, the subsurface volume comprises a mix of three phases: water, oil and gas.

Fluid saturation corresponds to the relative quantity of said fluid in the porous medium. It is generally expressed in percentage of the total volume of the porous medium.

The system 100 comprises a calculator 110 for obtaining at least one physical property of a subsurface volume of a hydrocarbon reservoir over time, a display unit 120 connected to the calculator 110 to display the results provided by the calculator 110 and a man-machine interface 130.

The calculator 110 comprises a database 140.

The database 140 is able to store the results provided by the calculator 110.

In the example of figure 1, the database 140 is a local database comprised in the calculator. In a variant, the database 140 is a remote database connected to the calculator 110 by a network.

The calculator 110 comprises a processor 150 and a memory 160 receiving software modules. The processor 150 is able to execute the software modules received in the memory 160 to carry out the method according to the invention.

The memory 160 contains an observed data obtaining module 170 configured for obtaining observed data representative of a fluid saturation in the subsurface volume over time. Typically, the observed data are stored in the database 140.

The data representative of the fluid saturation is for example a pressure, directly a fluid saturation, a seismic attribute or any parameter allowing reflecting variations of fluid saturation in the porous medium.

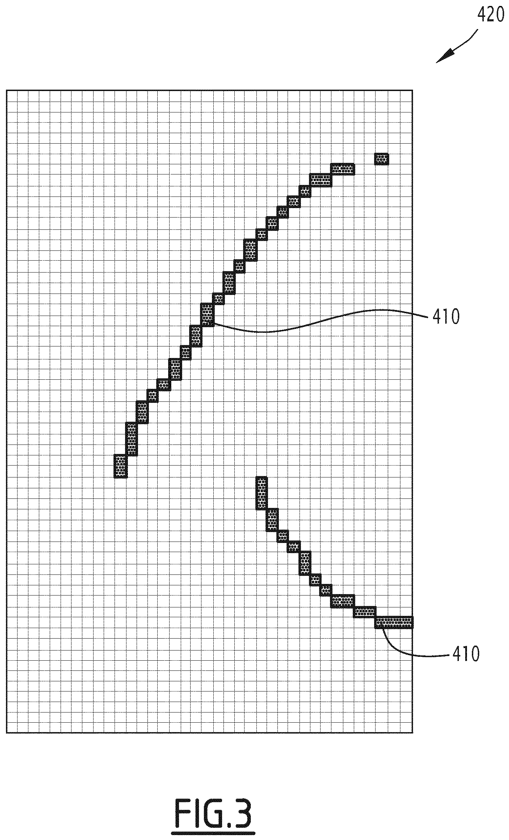

The memory 160 also comprises an observed fluid front mapping module 180 for mapping a location of at least one observed fluid front 410 (figure 3) over time from the observed data.

The memory 160 contains a simulated data obtaining module 190 for obtaining simulated data representative of the fluid saturation in the subsurface volume over time using at least one reservoir model 335.

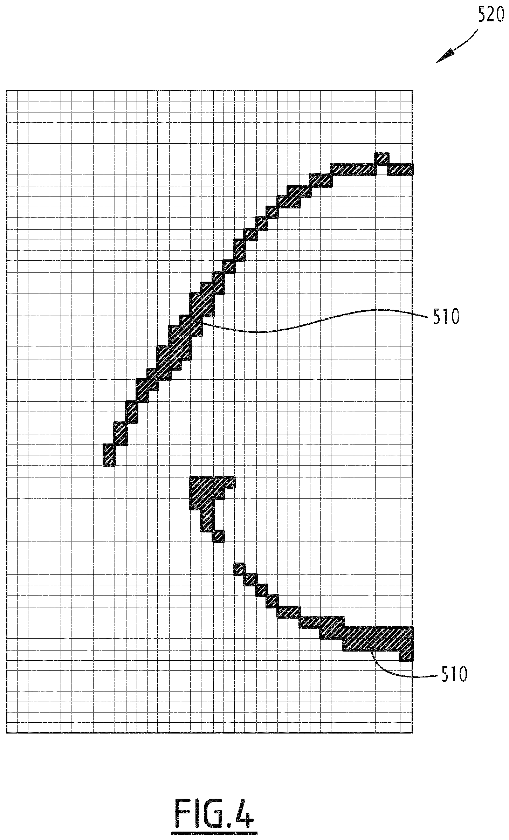

The memory 160 comprises a simulated fluid front mapping module 200 for mapping a location of at least one simulated fluid front 510 (figure 4) over time from simulated data.

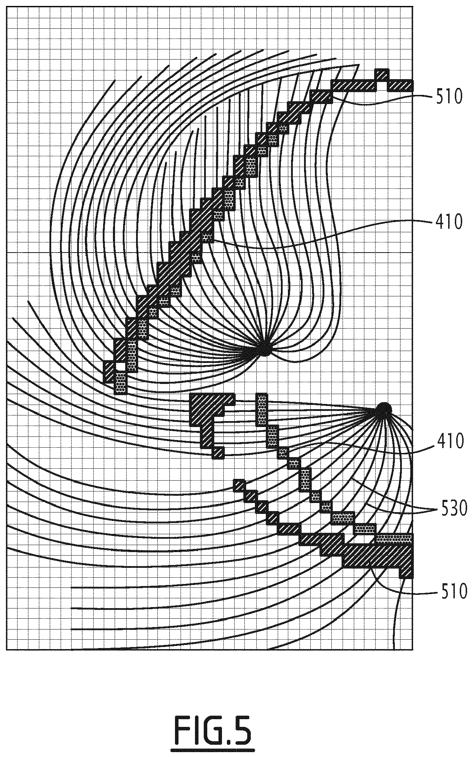

The memory 160 comprises a simulated fluid flow streamlines 530 (figure 5) obtaining module 210 for obtaining simulated fluid flow streamlines 530 in the subsurface volume over time using the at least one reservoir model 335 and a flow simulator 345.

Preferably, each observed fluid front mapping module 180 and simulated fluid front mapping module 200 comprises a calculating submodule 220, 230 for calculating data changes over time respectively on the observed data representative of the fluid saturation and/or on the simulated data representative of the fluid saturation in the subsurface volume and applying a data change threshold.

Moreover, according to the invention, the memory 160 comprises a computing module 240 for computing a cost function representing a mismatch between the observed data and the simulated data by calculating 375 at least a shortest distance d among a plurality of distances d along a corresponding plurality of simulated fluid flow streamlines 530, each of said simulated fluid flow streamlines 530 connecting a same first location of the observed fluid front 410 to a same second location of the simulated fluid front 510.

The memory 160 also contains a minimizing module 250 for minimizing said cost function.

Finally, the memory 160 comprises a physical property obtaining module 260 for obtaining the at least one physical property of the subsurface model over time.

The display unit 120 is for example able to display the observed data, the simulated data, the observed fluid front 410, the simulated fluid front 510, the simulated streamlines 530 and/or the physical property of a subsurface volume of a hydrocarbon reservoir over time. Moreover, the display unit 120 may display information relative to the progress of the method, such as the number of iterations, the lapsed time, etc.

Typically, the display unit 120 is a standard computer screen.

The man-machine interface 130 typically comprises a keyboard, a mouse and/or a touch screen to allow the user to activate the calculator 110 and the various software modules contained in the memory 160 to be processed by the processor 150.

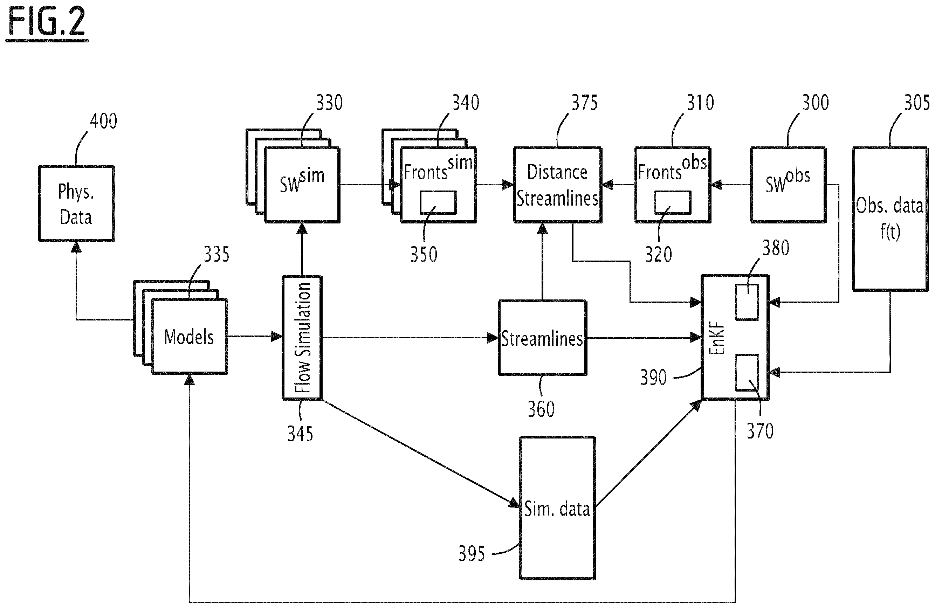

A flow chart of a method for obtaining at least one physical property of a subsurface volume of a hydrocarbon reservoir over time, according to an embodiment of the invention, carried out with the system 100 as described above is shown in figure 2.

The subsurface volume is generally discretized into a plurality of cells. At least one physical value, such as observed data representative of the fluid saturation, simulated data representative of the fluid saturation, is associated to at least a part of the plurality of cells.

The method comprises obtaining 300 observed data representative of the fluid saturation in the subsurface volume over time.

Preferably, the observed data are obtained from 4D seismic data inversion computed for the subsurface volume over time. For example, three-dimensional seismic data and/or borehole seismic data are acquired at different times over the subsurface volume and processed using a method known from the prior art. Typically, the different times are separated by a non-constant predetermined period of time comprised between months to several years. The observed data is for example a fluid saturation and associated fluid saturation changes over time, or a seismic attribute and associated seismic attribute changes over time reflecting respectively the fluid saturation in the medium and its change over time.

Grandi et al. (2009) in "Quantitative 4D warping inversion", International Petroleum Technology Conference, describe how to infer changes in fluid saturation (and to a lower extent of fluid pressure) from the repeated acquisition of 3D seismic cubes. Other examples of such methodologies may be found in the article of Williamson et al. (2007) entitled "A New Approach to Warping for Quantitative Time-Lapse Characterization", 69th EAGE Conference and Exhibition incorporating SPE EUROPEC, the article of Hodgson and Macbeth (2007) entitled "Inverting for reservoir pressure change using time-lapse time strain: Application to Genesis Field, Gulf of Mexico", The Leading Edge, 649-652, or the article of Trani et al. (2011) entitled "Estimation of changes in saturation and pressure from 4D seismic AVO and time-shift analysis", Geophysics, 76.

Advantageously, this step 300 allows obtaining observed data representative of the fluid saturation for each fluid present in the porous medium, i.e. for water, oil and gas, at different times.

Preferably, the method comprises also obtaining 305 additional observation data such as flow rates at the production and injections wells, bottom-hole pressures, temperatures, etc. Typically, said additional observations are function of time.

Then, the method comprises mapping 310 a location of at least one observed fluid front 410 (figure 3) over time from the observed data.

The mapping 310 is carried out on each 3D block of data representative of the fluid saturation for each phase contained in the medium.

The step 310 of mapping the location of the observed fluid front 410 comprises calculating 320 data changes over time on the observed data representative of the fluid saturation and applying a data change threshold.

For example, in case the observed data representative of the fluid saturation is a seismic attribute, the threshold is carefully determined using a petroelastic model, that is a group of equations expressing the seismic wave impedances (velocity and density) as a function of the rock characteristics (grains, porosity, fluids, etc). Changes in fluid saturation are translated into changes of seismic impedances and the threshold is determined as the minimum saturation changed causing an impedance change detectable by the interpretation instruments and techniques.

Therefore, preferably, the threshold is different for each considered fluid and it depends on the hydrocarbon reservoir.

More particularly, the step 310 for mapping the location of the observed fluid front 410 comprises determining a binary parameter for each cell of the subsurface model chosen among a downstream of the front state and an upstream of the front state. The fluid front is then formed by a plurality of cells located at the interface between the cells having a downstream of the front state and the cells having an upstream of the front state using the flow simulator 345.

The binary parameter of the cell is a downstream of the front state if the observed data value representative of the fluid saturation of said cell is above a threshold or if a data change over time of said cell is above a data change threshold. Otherwise, the binary parameter of the cell is upstream of the front state.

Figure 3 shows an example of a horizontal layer 420 extracted from a 3D block of observed data representative of the water saturation. The data changes between a reference time t₀ and a first time t₁ allow mapping two fronts 410. It has to be kept in mind that, although figure 3 shows the fronts 410 as lines, the observed fluid fronts and the simulated fluid fronts, as described later, are three-dimension surfaces.

The method according to the invention comprises obtaining 330 simulated data representative of the fluid saturation in the subsurface volume over time using at least one reservoir model 335 and then mapping 340 a location of at least one simulated fluid front 510 (figure 4) over time from simulated data.

Preferably, the method comprises obtaining a plurality of simulated data representative of the fluid saturation in the subsurface volume over time using a plurality of reservoir models 335.

The reservoir model 335 incorporates all the geological characteristics of the reservoir such as the structural shape and thicknesses of the geological formations, the lithologies, the porosity and permeability distributions, etc. This model 335 is then used as an input into a reservoir simulation using the flow simulator 345 to obtain dynamic reservoir simulations.

A general introduction to the reservoir engineering discipline is provided by Dake (2001) in "The practice of reservoir engineering, Elsevier Science B". A focus on the reservoir simulation principles can be found in the publication of Ertekin et al. (2001) entitled "Basic Applied Reservoir Simulation", SPE Textbook Series Vol. 7, and in the article of Abou-Kassem et al. (2006) entitled "Petroleum reservoir simulations: a basic approach", Gulf Publishing Company, Houston, TX, USA.

The mapping 340 of the simulated fluid front 510 is carried out similarly to the mapping of the observed fluid front 410, in particular said step 340 comprises calculating 350 data changes over time on the simulated data representative of the fluid saturation and applying a data change threshold.

Figure 4 shows a horizontal layer extracted 520 from a 3D block of simulated data representative of the water saturation. This layer is located at the same location as that of figure 3. The computation of the change of the data representative of the fluid saturation is carried out between the same reference time t₀ and first time t₁. Two corresponding simulated fluid fronts 510 can be identified in the layer 520 of figure 4.

Figure 5 shows a superposition of the observed fluid fronts 410 of figure 3 and the simulated fluid fronts 510 of figure 4. This figure allows a visual evaluation of the mismatch between the locations of the observed and simulated fronts 410, 510.

The method according to the invention comprises obtaining 360 simulated fluid flow streamlines 530 in the subsurface volume over time using the at least one reservoir model 335, typically using the flow simulator 345.

In particular, the fluid flow streamlines 530 are computed from the flow simulation results by taking into account the locations of the wells in the corresponding surface area of the subsurface volume over time.

Figure 5 shows a projection of the streamlines 530 in the layer of figures 3 and 4. The streamlines 530 are computed in three-dimensions in the subsurface volume.

For the sake of clarity, only a limited number of streamlines 530 are shown on the figure.

The method then comprises computing 370 a cost function comprising a mismatch representing a mismatch between the observed data and the simulated data by calculating 375 at least one shortest distance d among a plurality of distances d along a corresponding plurality of simulated fluid flow streamlines 530, each of said simulated fluid flow streamlines 530 connecting a same first location of the observed fluid front 410 to a same second location of the simulated fluid front 510.

The calculated distance d is made in the three-dimension space and is then a curvilinear distance along the streamline 530.

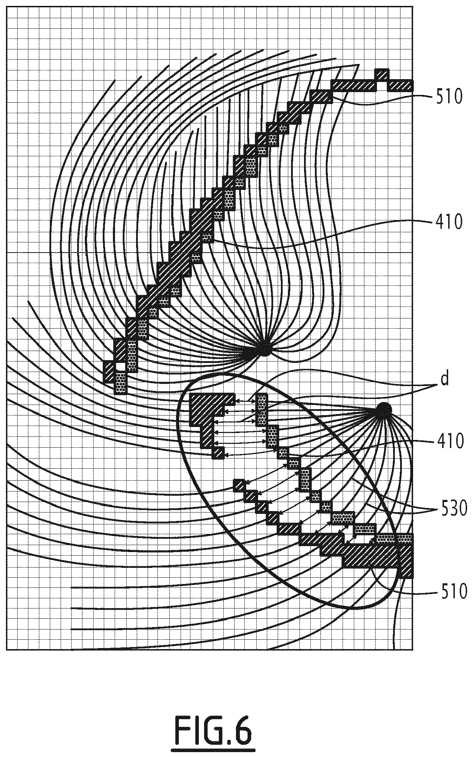

The location of any point of the simulated fluid front 510 is connected to the location of a point of the observed fluid front 410 by a plurality of streamlines 530 of the simulated fluid flow streamlines 530, as shown in figure 6. For the sake of clarity, only one streamline between each cell of the observed fluid front and each cell of the simulated fluid front is shown in figure 6.

In particular, a plurality of distances d along the corresponding plurality of streamlines 530 connecting the same first cell of the simulated fluid front 510 to the same second cell of the observed fluid front 410 is calculated.

Then, the method comprises computing the shortest distance d among said plurality of distances d (figure 6).

The output is a three-dimension surface for each couple of observed front/simulated front 410, 510 made of a plurality of cells, each cell of the surface having a value corresponding to the shortest distance d measured along the streamlines. According to the invention, the method comprises minimizing 380 the cost function.

In the embodiment wherein a plurality of simulated data are calculated using a plurality of reservoir models 335, the shortest distance d is computed for each couple of observed fluid front 410 and simulated fluid front 510 corresponding to each reservoir model 335. In that respect, the first location of the observed fluid front 410 and the second location of the simulated fluid front 510 may be specific to the considered couple of observed fluid front 410 and simulated fluid front 510, i.e. specific to the corresponding reservoir model 335.

Preferably, the method comprises applying 390 an ensemble-based method, such as an ensemble Kalman filter, for carrying out said step. Ensemble-based methods involve starting with an ensemble of initial models 335 of the subsurface volume.

Simulated data, in particular simulated fluid saturation data, and additional simulated data 395 such as flow rates, etc. are calculated for each initial model 335, for a plurality of times. The covariance between observed data (saturation data, production rates, bottom-hole-pressure) and simulated data is computed. The resultant correlation data is combined with the mismatch to produce an ensemble of updated models 335 which should be in greater conformity with the observed data representative of the fluid saturation. The updated models 335 are then used as new inputs for further simulations in the flow simulator 345. The process is then iterated several times to obtain models in agreement with observed data 300, 305.

Details regarding the implementation of the ensemble-based methods may be found for example in Anoze Emerick and Reynolds entitled "Ensemble Smoother with Multiple data Assimilation", Computers and Geosciences, June 2013.

The invention also relates to computer program product comprising software instructions which, when executed by a computer, carry out the method as described above.

The method according to the invention allows obtaining 400 physical properties of the hydrocarbon reservoir such an updated oil and gas fluid flow rates, fluid flow properties, pressure, temperature, etc. for the simulated models. These simulated data are more correct with respect to the initial stage and therefore there are more likely to better predict the future production. Therefore, these properties are important for the assessment and the development of the hydrocarbon reservoir. The method according to the invention allows a calculation of a 3D distance which is consistent for each flow simulation since the distance is computed along the corresponding simulated streamlines. It allows a strong decrease of the observation matrix size involved in the inversion process and then lead to an improvement in the process time allowing the use of the method on real large 3D cases. Finally, the set of shortest distance data can be easily subsampled by selecting an amount of streamlines.

## Claims

1. A method for obtaining at least one physical property of a subsurface volume of a hydrocarbon reservoir over time, the subsurface volume comprising a porous medium containing at least one fluid, the method being carried out by a system (100) for obtaining at least one physical property of a subsurface volume of a hydrocarbon reservoir over time, said method comprising the following steps:
- obtaining (300) observed data representative of a fluid saturation in the subsurface volume over time,
- mapping (310) a location of at least one observed fluid front (410) over time from the observed data,
- obtaining (330) simulated data representative of the fluid saturation in the subsurface volume over time using at least one reservoir model (335),
- mapping (340) a location of at least one simulated fluid front (510) over time from the simulated data,
- obtaining (360) simulated fluid flow streamlines (530) in the subsurface volume over time from a flow simulator (345),
- computing (370) a cost function representing a mismatch between the observed data and the simulated data by calculating (375) at least one shortest distance (d) among a plurality of distances (d) along a corresponding plurality of simulated fluid flow streamlines (530), each of said simulated fluid flow streamlines (530) connecting a same first location of the observed fluid front (410) to a same second location of the simulated fluid front (510),
- minimizing (380) said cost function,
- obtaining (400) the at least one physical property of the subsurface model over time.

2. The method according to claim 1, wherein the observed data representative of the fluid saturation are obtained from seismic data inversion computed for the subsurface volume over time.

3. The method according to claim 1 or 2, wherein the at least one observed fluid front (410) and/or the at least one simulated fluid (510) front are three-dimension surfaces.

4. The method according to any one of claims 1 to 3, wherein each calculated distance (d) is a curvilinear distance along the fluid flow streamline (530).

5. The method according to any one of claims 1 to 4, wherein the location of any point of the observed fluid front (510) is connected to the location of a point of the simulated fluid (410) front by a plurality of streamlines (530) of the simulated fluid flow streamlines (530).

6. The method according to any one of claims 1 to 5, comprising obtaining a plurality of simulated data representative of the fluid saturation in the subsurface volume over time using a plurality of reservoir models (335).

7. The method according to claim 6, comprising applying (390) an ensemble-based methods, such as an ensemble Kalman filter, for evaluating the plurality of reservoir models (335).

8. The method according to any one of claims 1 to 7, wherein the step (310, 340) of mapping the location of the at least one observed fluid front (410) and/or of the location of the at least one simulated fluid front (510) comprises calculating (320, 350) data changes over time respectively on the observed data and/or on the simulated data in the subsurface volume and applying a data change threshold.

9. The method according to any one of claims 1 to 8, wherein the subsurface volume is discretized into a plurality of cells, at least a part of the plurality of cells having at least one observed data value representative of the fluid saturation and at least one simulated data value representative of the fluid saturation.

10. The method according to claims 8 and 9, wherein the step (310, 340) for mapping the location of the at least one observed fluid front (410) and/or the at least one simulated fluid front (510) comprises determining a binary parameter for each cell of the subsurface model chosen among a downstream of the front state and an upstream of the front state using the flow simulator (345), the fluid front (410, 510) being formed by a plurality of cells located at the interface between the cells having a downstream of the front state and the cells having an upstream of the front state.

11. The method according to claim 10, wherein the binary parameter of the cell is a downstream of the front state if the observed data value and/or simulated data value of said cell is above a threshold or if a data change over time of said cell is above a data change threshold.

12. The method according to claim 11, wherein the distance (d) along the streamline (530) is calculated between one cell of the simulated fluid front (510) and one cell of the observed fluid front (410).

13. A system (100) for obtaining at least one physical property of a subsurface volume of a hydrocarbon reservoir over time, said system comprising:
- an observed data obtaining module (170) configured for obtaining observed data representative of a fluid saturation in the subsurface volume over time,
- an observed fluid front mapping module (180) for mapping a location of at least one observed fluid front (410) over time from the observed data,
- a simulated data obtaining module (190) for obtaining simulated data representative of the fluid saturation in the subsurface volume over time using at least one reservoir model (335),
- a simulated fluid front mapping module (200) for mapping a location of at least one simulated fluid front (510) over time from the simulated data,
- a simulated fluid flow streamlines obtaining module (210) for obtaining simulated fluid flow streamlines (530) in the subsurface volume over time from a flow simulator (345),
- a computing module (240) for computing a cost function representing a mismatch between the observed data and the simulated data by calculating (375) at least one shortest distance (d) among a plurality of distances (d) along a corresponding plurality of simulated fluid flow streamlines (530), each of said simulated fluid flow streamlines (530) connecting a same first location of the observed fluid front (410) to a same second location of the simulated fluid front (510),
- a minimizing module (250) for minimizing said cost function,
- a physical property obtaining module (260) for obtaining the at least one physical property of the subsurface model over time.

14. The system (100) according to claim 13, wherein each observed fluid front mapping module (180) and simulated fluid front mapping module (200) comprises a calculating submodule (220, 230) for calculating data changes over time respectively on the observed data representative of the fluid saturation and/or on the simulated data representative of the fluid saturation in the subsurface volume and applying a data change threshold.

15. Computer program product comprising software instructions which, when executed by a computer, carry out the method according to any one of claims 1 to 12.
